(19) Europäisches Patentamt / European Patent Office / Office européen des brevets

(11) **EP 2 463 992 B1**

(12) **EUROPÄISCHE PATENTSCHRIFT**

(45) Veröffentlichungstag und Bekanntmachung des Hinweises auf die Patenterteilung:
**29.07.2015 Patentblatt 2015/31**

(51) Int Cl.:
**H02K 21/02** *(2006.01)*    *H02K 15/12* *(2006.01)*

(21) Anmeldenummer: **10194160.7**

(22) Anmeldetag: **08.12.2010**

(54) **Permanentmagneterregter Elektromotor mit Heizeinrichtung und Betriebsverfahren**

Permanent magnet electric motor with heating device and operating method

Moteur électrique aux aimants permanents doté d'un dispositif de chauffage et procédé de fonctionnement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.06.2012 Patentblatt 2012/24**

(73) Patentinhaber: **Siemens Aktiengesellschaft**
**80333 München (DE)**

(72) Erfinder:
• **Potoradi, Detlef**
  **97616 Bad Neustadt/Saale (Mühlbach) (DE)**
• **Vollmer, Rolf**
  **36129 Gersfeld (DE)**
• **van Riesen, Dirk**
  **97941 Tauberbischofsheim (DE)**

(56) Entgegenhaltungen:
**EP-A1- 2 306 105    WO-A1-2009/151033**

**Beschreibung**

Die vorliegende Erfindung betrifft einen permanentmagneterregten Elektromotor mit einem ersten Aktivteil, das mit Permanentmagneten besetzt ist, und einem zweiten Aktivteil, das durch Magnetkraft der Permanentmagnete gegenüber dem ersten Aktivteil bewegbar ist. Darüber hinaus betrifft die vorliegende Erfindung ein Verfahren zum Betreiben eines permanentmagneterregten Elektromotors der oben genannten Art.

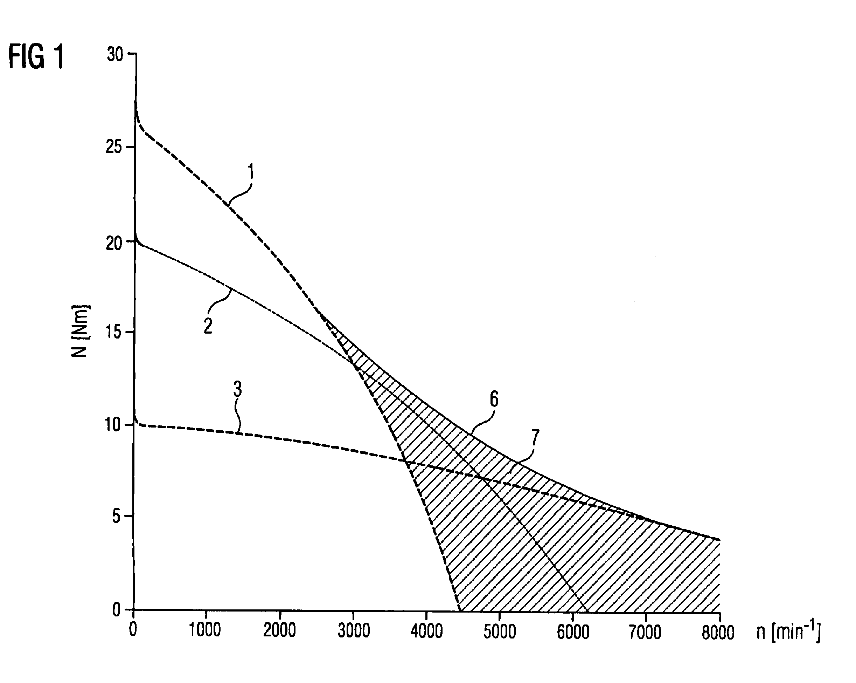

Das Drehmoment von Elektromotoren nimmt typischerweise mit steigender Drehzahl ab. In dem Diagramm von FIG 1 ist dies beispielhaft dargestellt. Die Kennlinie 1 repräsentiert einen PM-Synchronmotor mit starken Permanentmagneten. Ihre Remanenzinduktion $B_r$ beträgt 1,1 T. Der Synchronmotor besitzt bei kleinen Drehzahlen ein Drehmoment bis über 25 Nm. Das Drehmoment fällt mit steigernder Drehzahl rasch ab und erreicht bei etwa 4500 min$^{-1}$ den Wert 0 Nm. Dies bedeutet, dass diese Synchronmaschine bei kleinen Drehzahlen ein hohes Drehmoment besitzt, bei hohen Drehzahlen aber nur eine geringe Leistung.

Die Kennlinie 2 in FIG 1 repräsentiert einen PM-Synchronmotor mit schwächeren Permanentmagneten. Bei geringen Drehzahlen erreicht das Drehmoment fast 20 Nm und es sinkt dann auf 0 Nm ab bei etwa 6200 min$^{-1}$. Die Remanenzinduktion $B_r$ beträgt bei diesen Permanentmagneten 0,8 T. Die Synchronmaschine hat damit bei kleinen Drehzahlen zwar ein geringeres Drehmoment aber bei höheren Drehzahlen bereits eine höhere Leistung.

Weiterhin repräsentiert die Kennlinie 3 einen PM-Synchronmotor mit verhältnismäßig schwachen Permanentmagneten. Die Remanenzinduktion $B_r$ beträgt hier 0,4 T. Bei kleinen Drehzahlen erreicht das Drehmoment den Wert 10 Nm. Das Drehmoment sinkt nur langsam ab und besitzt bei 8000 min$^{-1}$ immer noch etwa einen Wert von 5 Nm. Dies wiederum bedeutet, dass der PM-Synchronmotor bei niedrigen Drehzahlen ein geringes Drehmoment besitzt, bei hohen Drehzahlen hingegen eine sehr hohe Leistung erbringen kann.

Die Permanentmagnete einer Synchronmaschine sind damit entsprechend ihrem gewünschten Arbeitspunkt (Drehzahl) zu wählen. Wird ein hohes Drehmoment bei geringen Drehzahlen gefordert, so sind starke Permanentmagnete einzusetzen. Wenn hingegen eine hohe Leistung bei hohen Drehzahlen gefordert ist, sind eher schwächere Permanentmagnete einzusetzen.

Soll bei geringer Drehzahl ein hohes Drehmoment und bei hohen Drehzahlen eine hohe Leistung erzielt werden, so bedient man sich bei PM-Maschinen der Feldschwächung der Permanentmagnete. Dies wird dadurch erreicht, dass ein Längsstrom, dessen Feld sich dem Feld der Permanentmagnete überlagert und dieses dadurch schwächt, eingeprägt wird. Nachteil davon ist zum einen, dass dieser feldschwächende Strom seinerseits Verluste in den Wicklungen erzeugt. Zum anderen darf der eingeprägte Strom nicht zu groß werden, damit die Permanentmagnete nicht irreversibel geschwächt werden. Des Weiteren entstehen Oberwellenfelder durch Sättigung, die wieder die Eisenverluste erhöhen.

**Aus der Druckschrift** WO 2009/151033 A1 **ist ein gattungsgemäßer permanentmagneterregter Elektromotor mit einem Rotor, der Permanentmagnete aufweist, und einem Stator, der den Rotor durch Magnetkraft bewegt, bekannt. Die Wicklungen des Stators werden so angesteuert, dass sie sich und damit auch die Permanentmagneten in Abhängigkeit von der Geschwindigkeit des Rotors erwärmten. Dadurch wird das Magnetfeld der Permanentmagnete geschwächt.**

Die Aufgabe der vorliegenden Erfindung besteht somit darin, einen permanentmagneterregten Elektromotor bereitzustellen, mit dem bei geringen Drehzahlen ein hohes Drehmoment und bei hohen Drehzahlen eine hohe Leistung ohne die oben genannten Nachteile erreicht werden können. Darüber hinaus soll ein entsprechendes Verfahren zum Betreiben eines Elektromotors bereitgestellt werden.

Erfindungsgemäß wird diese Aufgabe gelöst durch einen permanentmagneterregten Elektromotor nach Anspruch 1.

Darüber hinaus wird erfindungsgemäß bereitgestellt ein Verfahren nach Anspruch 5.

In vorteilhafter Weise wird das Magnetfeld der Permanentmagnete durch die Erwärmung echt geschwächt, denn die Remanenzreduktion $B_r$ sinkt mit steigender Temperatur. Die Permanentmagnete werden also bei niedrigen Drehzahlen auf einer niedrigeren Temperatur betrieben und bei einer höheren Drehzahl auf einer deutlich höheren Temperatur, da sie durch die Heizeinrichtung z. B. bei den hohen Drehzahlen zusätzlich bewusst geheizt werden.

Vorzugsweise handelt es sich bei dem ersten Aktivteil um einen Rotor und bei dem zweiten Aktivteil um einen Stator, wobei sich die Geschwindigkeit der beiden Aktivteile zueinander aus der Drehzahl des Rotors ergibt. Prinzipiell kann natürlich auch ein Linearmotor von der vorliegenden Erfindung profitieren, wobei dann das erste Aktivteil das Primärteil und das zweite Aktivteil das Sekundärteil oder umgekehrt ist.

Darüber hinaus können mit der Heizeinrichtung alle Permanentmagnete des ersten Aktivteils in Abhängigkeit von der Geschwindigkeit erwärmbar sein. Je nach gewünschtem Ziel können somit nur einzelne oder alle Permanentmagnete zur Reduktion ihrer Remanenzinduktion erwärmt werden.

Erfindungsgemäß weist die Heizeinrichtung als ein gegenüber dem zweiten Aktivteil separates Heizelement eine Heizwendel oder einen Heizwiderstand auf. Ebenfalls wird bei dieser Ausführungsform zusätzlich zu dem ersten und zweiten Aktivteil eine weitere separate Vorrichtung, nämlich die Heizeinrichtung in dem Elektromotor verbaut, um die Permanentmagnete des ersten Aktivteils zu heizen. Dies hat den Vorteil, dass die Ansteuerung der Aktivteile vollkommen unabhängig von der Ansteuerung der Heizeinrichtung sein kann.

Gemäß einer nicht beanspruchten Alternative wird für das Heizen der Permanentmagnete des ersten Aktivteils das zweite Aktivteil mit verwendet. Die Heizeinrichtung umfasst daher das zweite Aktivteil und eine Ansteuereinrichtung, mit der eine Taktfrequenz und/oder ein Signalmuster des Ansteuersignals für das zweite Aktivteil zum Zwecke der gezielten Erwärmung des ersten Aktivteils bzw. der Magnete des ersten Aktivteils einstellbar ist/sind. Die Heizung erfolgt durch die geschickte Ansteuerung des zweiten Aktivteils mit einem Ansteuersignal, so dass im ersten Aktivteil Ströme induziert werden, die entsprechende Verluste hervorrufen, welche zu einer (üblicherweise nicht gewollten) Erwärmung führen.

In besonders vorteilhafter Weise besitzt der Temperaturkoeffizient der Remanenzinduktion des Magnetmaterials einen mittleren Wert zwischen -0,4 %/°C und -0,6 %/°C im Temperaturbereich von 20 °C bis 150 °C. Dabei stellt der Temperaturkoeffizient einen linearisierten Wert (Steigung) des Temperaturverlaufs der Remanenzinduktion dar. Damit wird eine deutliche Temperaturabhängigkeit generiert, die aber noch nicht so stark ist, dass durch minimale Eigenerwärmung bereits eine deutliche Feldschwächung hervorgerufen wird.

Bei dem erfindungsgemäßen Verfahren wird also zur Schwächung des Magnetfelds des Permanentmagneten dieser in Abhängigkeit von der Geschwindigkeit des ersten Aktivteils bzw. Rotors erwärmt. Die zusätzlich benötigte Wärme kann durch Wärmeenergie aus dem separaten Heizelement oder aber (hier nicht beansprucht) durch spezielle Ansteuerung des zweiten Aktivteils und Induktion im ersten Aktivteil gewonnen werden. Im letzteren Fall wird die Taktfrequenz und/oder ein Signalmuster des Ansteuersignals zur Ansteuerung des zweiten Aktivteils bei einer gegebenen Geschwindigkeit so gewählt, dass die durch Induktion hervorgerufene Verlustwärme im ersten Aktivteil deutlich größer ist als eine minimale Verlustwärme, die sich einstellt, wenn das erste Aktivteil nicht bewusst geheizt wird.

Die vorliegende Erfindung wird nun anhand der beigefügten Zeichnungen näher erläutert, in denen zeigen:

FIG 1     ein Diagramm von Dauerdrehmomenten über der Drehzahl von PM-Synchronmaschinen mit unterschiedlichen Permanentmagneten;

FIG 2     Entmagnetisierungskurven für einen Magnetwerkstoff bei unterschiedlichen Temperaturen und

FIG 3     einen Querschnitt durch einen Teil eines PM-Synchronmotors mit separater Heizung für die Permanentmagnete.

Die nachfolgend näher geschilderten Ausführungsbeispiele stellen bevorzugte Ausführungsformen der vorliegenden Erfindung dar.

Wie eingangs erwähnt wurde, soll eine elektrische Maschine (insbesondere Synchronmaschine) mit Permanentmagneterregung (PM-Maschine) aufgebaut werden, die bei geringen Drehzahlen ein hohes Drehmoment und bei hohen Drehzahlen eine hohe Leistung besitzt (vgl. FIG 1). Das Drehmoment einer PM-Maschine ist proportional zur Luftspaltinduktion und somit zur Remanenz der Magnete. Auch die Eisenverluste bei der Drehzahl sind von der Induktion und somit von der Remanenz abhängig, so dass es für jeden Betriebspunkt (Betriebsdrehzahl) eine optimale Remanenz gibt. Für das thermisch zulässige Drehmoment bzw. den optimalen Wirkungsgrad gilt näherungsweise

$$M\left(B_r, n\right) = c \cdot B_r - c_1 \cdot B_r^2 \cdot n^2$$

$$\eta\left(B_r, n\right) = \frac{k \cdot B_r \cdot n - k_1 \cdot B_r^2 \cdot n^2}{k \cdot B_r \cdot n + k_2 \cdot \dfrac{1}{B_r^2}}$$

Hierbei repräsentiert $B_r$ die Remanenz und n die Drehzahl des Rotors der PM-Maschine. Die Buchstaben c, $C_1$, k, $k_1$ und $k_2$ stellen Konstanten dar. Das Drehmoment M und der Wirkungsgrad n sind somit Funktionen der Remanenz $B_r$ und der Drehzahl n. Das Drehmoment kann also für jede Drehzahl über der Remanenz als Parabel mit Spitze nach oben dargestellt werden. An dem Maximum lässt sich der optimale Remanenzwert für die jeweilige Drehzahl erkennen.

Je höher die Drehzahl ist, umso niedriger muss die Remanenz sein, um das maximale Drehmoment und einen optimalen Wirkungsgrad zu erreichen. Das Ziel ist es nun, beispielsweise bei einer PM-Synchronmaschine eine echte drehzahlabhängige Feldschwächung zu erreichen. Dies wird durch eine gezielte Erhöhung der Temperatur der Permanentmagnete über die Mindesttemperatur hinaus erreicht, die sich beim üblichen Betrieb mit dem Ziel möglichst geringer Verlustwärme einstellt. Um den Effekt der Feldschwächung durch zusätzliche Wärme besser ausnutzen zu können, sollten spezielle Magnetmaterialien eingesetzt werden.

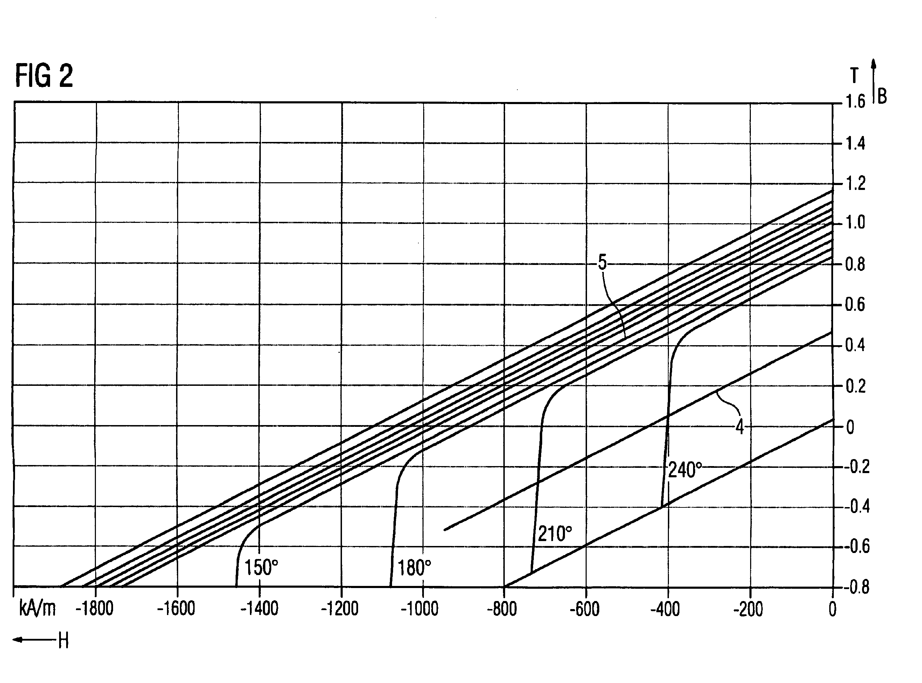

FIG 2 zeigt für ein typisches Magnetmaterial Entmagnetisierungskurven bei verschiedenen Temperaturen. An der Ordinate sind die Remanenzinduktionen $B_r$ und an der Abszisse bei B = 0 T die Koerzitivfeldstärken abzulesen. Die Remanenzinduktion $B_r$ sinkt also für dieses Material bei einer Temperaturerhöhung von 20 °C auf 240 °C von etwas unter 1,2 T auf etwas über 0,8 T ab. Dies entspricht einem Temperaturkoeffizienten TK $(B_r)$ der Remanenzinduktion von etwa -0,11 %/°C. Typische Werte für diesen Temperaturkoeffizienten liegen zwischen -0,09 %/°C bis -0,11 %/°C. Damit jedoch die Feldschwächung bei Temperaturerhöhung vergrößert wird, sollte ein Material mit einem Temperaturkoeffizienten im Bereich -0,4 %/°C bis -0,6 %/°C gewählt werden. Die Entmagnetisierungskurve für ein derartiges Material ist in FIG 2 mit dem Bezugszeichen 4 gekennzeichnet. Diese Entmagnetisierungskurve 4 gilt für die Temperatur von 150°C. Für das typische Magnetmaterial ergibt sich hingegen die Entmagnetisierungskurve 5 für 150°C. Die wesentlich höhere Temperaturabhängigkeit des Materials mit der Entmagnetisierungskurve 4 ist deutlich zu erkennen. Mit dem Magnetmaterial gemäß Entmagnetisierungskurve 4 ist es möglich, durch Erhöhung der Temperatur des Permanentmagneten dessen Feld zu schwächen. Die maximale Koerzitivfeldstärke und damit die Entmagnetisierungsfestigkeit des Magneten sollte sich hingegen möglichst wenig mit der Temperatur ändern (TK ($H_c$)). Der Knick der Entmagnetisierungskurve 4 sollte beispielsweise auch bei etwa -1200 kA/m liegen wie bei der Entmagnetisierungskurve 5 des typischen Magnetmaterials.

Das Absinken der Remanenzinduktion $B_r$ durch die erfindungsgemäße Erwärmung in Abhängigkeit von der Drehzahl hat nun zur Folge, dass die PM-Maschine bei niedrigen Drehzahlen mit starken Magneten und bei hohen Drehzahlen mit schwachen Magneten ausgestattet ist. Im Hinblick auf FIG 1 verläuft das maximale Drehmoment wegen der drehzahlabhängigen Erwärmung der Permanentmagnete nun entlang der Kurve 6, die bei niedrigen Drehzahlen entlang der Kurve 1 und bei hohen Drehzahlen entlang der Kurve 3 verläuft. War bei PM-Maschinen mit einem Magnetmaterial beispielsweise entsprechend der Kurve 1 bislang also nur der Bereich unterhalb der Kurve 1 nutzbar, so ergibt sich durch die Erfindung für das gleiche Material der zusätzliche, in FIG 1 schraffierte Einsatzbereich 7 der PM-Maschine. Es ist damit leicht zu erkennen, dass durch die Erwärmung der Permanentmagnete in Abhängigkeit von der Drehzahl und damit durch die Reduktion der Remanenzinduktion in Abhängigkeit von der Drehzahl bei hohen Drehzahlen auch eine hohe Leistung abgegriffen werden und gleichzeitig bei niedrigen Drehzahlen ein hohes Drehmoment zur Verfügung steht.

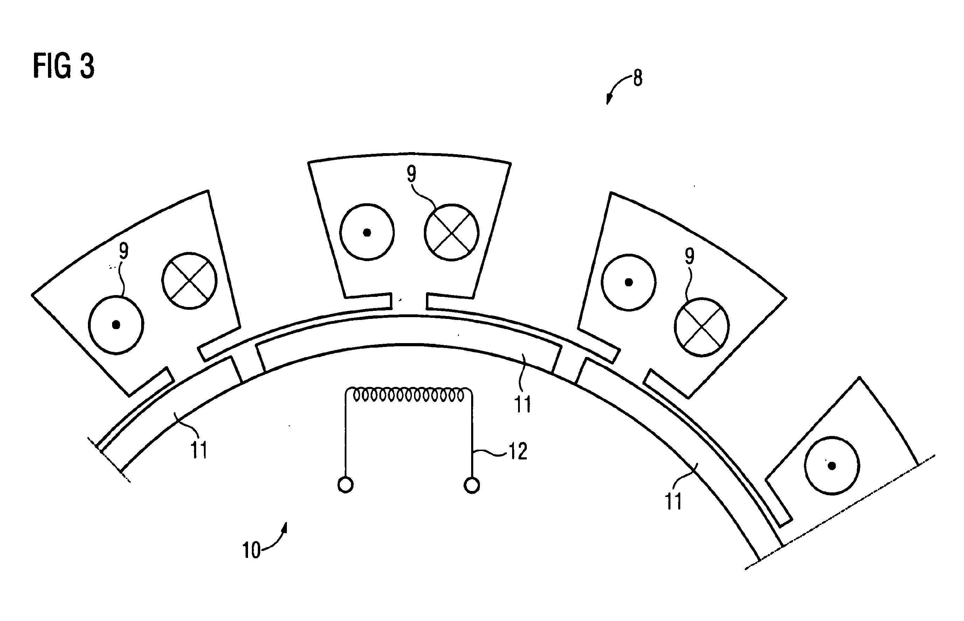

Die Erhöhung der Temperatur des Magneten kann auf verschiedene Arten erreicht werden. Zum einen kann der Magnet bzw. Permanentmagnet durch eine separate geeignete Heizeinrichtung erwärmt werden, wie dies in FIG 3 symbolisiert ist. Es ist dort der Stator 8 (zweites Aktivteil) mit seinen Wicklungen 9 zu erkennen. Radial innerhalb des Stators 8 ist ein Rotor 10 (erstes Aktivteil) mit Permanentmagneten 11 angeordnet. Symbolisch ist ein Heizelement 12 unterhalb eines Permanentmagneten 11 angedeutet. Das Heizelement 12 ist eine Heizwendel oder ein einfach angebrachter Heizwiderstand. Wesentlich bei dieser Art Beheizung ist, dass es gegenüber den anderen Komponenten des Elektromotors und insbesondere gegenüber dem Stator 8 (zweites Aktivteil) separat ist. Das Heizelement 12 wird unabhängig von den Wicklung 9 des Stators 8 angesteuert.

Gemäß einer hier nicht beanspruchten Variante kann die Heizung der Permanentmagnete 11 auch durch den Stator 8, d. h. mittelbar über das zweite Aktivteil erfolgen. Dies kann durch die Eisenverluste im Rotor 10 und Wirbelstromverluste im Magneten 11 erreicht werden. Diese Verluste sind nämlich von der Taktfrequenz eines Umrichters und von dem Schaltmuster bzw. Ansteuerungsgrad des Ansteuersignals abhängig, mit dem die PM-Maschine angesteuert wird. Die Taktfrequenz und das Schaltmuster bzw. der Ansteuerungsgrad lässt sich in einer geeigneten Ansteuereinrichtung, die die PM-Maschine ansteuert, einstellen. Die Ansteuereinrichtung umfasst dabei üblicherweise den Umrichter. Die Erwärmung wird also hier durch entsprechende Ansteuerung des Stators verursacht, während sie im vorhergehenden Beispiel durch entsprechende Ansteuerung eines separaten Heizelements im oder am Rotor erfolgt.

Die gewünschte Erwärmung der Permanentmagnete bei hohen Drehzahlen lässt sich auf einfache Weise auch folgendermaßen erzielen. Bei höheren Drehzahlen sind die Eisenverluste, auch im Rotor 10, hoch. Dadurch wird der Rotor 10 und damit der bzw. die Magnete 11 erwärmt. Es ergibt sich eine automatische Feldschwächung, die bei den höheren Drehzahlen gewünscht ist. Um den gewünschten Effekt in ausreichendem Maße zu erzielen, ist dann ein geeignetes Material entsprechend der Entmagnetisierungskurve 4 von FIG 2 mit betragsmäßig ausreichend hohem Temperaturkoeffizienten zu wählen. Dies kann auch für eine Selbstregelung genutzt werden, die eine Überlastung des Motors verhindert.

Insgesamt lässt sich somit feststellen, dass elektromechanische Energiewandler (wie der oben beschriebene PM-Synchronmotor), die mit den beschriebenen Magneten und der erfindungsgemäßen Technik Feldschwächung betreiben, bei hohen Drehzahlen geringere Verluste, eine geringere Ständererwärmung und einem besseren Wirkungsgrad besitzen.

**Patentansprüche**

1. Permanentmagneterregter Elektromotor mit

   - einem ersten Aktivteil (10), das mit Permanentmagneten (11) besetzt ist, und
   - einem zweiten Aktivteil (8), das durch Magnetkraft der Permanentmagnete gegenüber dem ersten Aktivteil bewegbar ist, sowie
   - einer Heizeinrichtung (12), mit der das Magnetfeld mindestens eines der Permanentmagnete (11) durch Erwärmen des Permanentmagneten in Abhängigkeit von einer Geschwindigkeit des ersten Aktivteils gegenüber dem zweiten Aktivteil schwächbar ist, wobei
   - die Heizeinrichtung (12) ein gegenüber dem zweiten Aktivteil (8) separates Heizelement aufweist, wobei
   - das Heizelement unabhängig von einer Ansteuerung des zweiten Aktivteils (8) angesteuert ist,
   **dadurch gekennzeichnet, dass**

- das Heizelement eine Heizwendel oder ein Heizwiderstand ist.

**2.** Permanentmagneterregter Elektromotor nach Anspruch 1, wobei das erste Aktivteil (10) ein Rotor und das zweite Aktivteil (8) ein Stator ist, und wobei sich die Geschwindigkeit aus der Drehzahl des Rotors ergibt.

**3.** Permanentmagneterregter Elektromotor nach Anspruch 1 oder 2, wobei mit der Heizeinrichtung (12) alle Permanentmagnete des ersten Aktivteils in Abhängigkeit von der Geschwindigkeit erwärmbar sind.

**4.** Permanentmagneterregter Elektromotor nach einem der vorhergehenden Ansprüche, wobei der Temperaturkoeffizient der Remanenzinduktion des Permanentmagneten im Temperaturbereich 20 °C bis 150 °C einen mittleren Wert zwischen -0,4 %/°C und -0,6 %/°C besitzt.

**5.** Verfahren zum Betreiben eines permanentmagneterregten Elektromotors, der ein erstes Aktivteil (8), das mit Permanentmagneten (11) besetzt ist, und ein zweites Aktivteil (10), das durch Magnetkraft der Permanentmagnete gegenüber dem ersten Aktivteil bewegbar ist, aufweist, durch

- Bewegen des ersten Aktivteils (8) gegenüber dem zweiten Aktivteil (10), und
- Erwärmen mindestens eines der Permanentmagnete (11) in Abhängigkeit von einer Geschwindigkeit des ersten Aktivteils (8) gegenüber dem zweiten Aktivteil (10), so dass das Magnetfeld des Permanentmagneten geschwächt wird, wobei
- das Erwärmen durch ein gegenüber dem zweiten Aktivteil (8) separates Heizelement (12) erfolgt, und
- das Heizelement unabhängig von einer Ansteuerung des zweiten Aktivteils (8) angesteuert wird,
**dadurch gekennzeichnet, dass**
- das Erwärmen durch eine Heizwendel oder einen Heizwiderstand erfolgt.

**6.** Verfahren nach Anspruch 5, wobei der Permanentmagnet (11) durch Verlustwärme des zweiten Aktivteils (8) und zusätzlich durch Wärmeenergie von dem Heizelement (12) erwärmt wird.

**Claims**

**1.** Permanent-magnet-excited electric motor comprising

- a first active part (10) which is fitted with permanent magnets (11), and
- a second active part (8) which can be moved relative to the first active part by means of magnetic force of the permanent magnets, as well as
- a heating device (12) by means of which the magnetic field of at least one of the permanent magnets (11) can be weakened by heating the permanent magnet as a function of a speed of the first active part relative to the second active part, wherein
- the heating device (12) has a separate heating element with respect to the second active part (8), wherein
- the heating element is controlled independently of the
second active part (8),
**characterised in that**
- the heating element is a heating coil or a heating resistor.

**2.** Permanent-magnet-excited electric motor according to claim 1, wherein the first active part (10) is a rotor and the second active part (8) is a stator, and wherein the speed is a product of the rotational speed of the rotor.

**3.** Permanent-magnet-excited electric motor according to claim 1 or 2, wherein all the permanent magnets of the first active part can be heated as a function of the speed by means of the heating device (12).

**4.** Permanent-magnet-excited electric motor according to one of the preceding claims, wherein the temperature coefficient of the residual induction of the permanent magnet in the temperature range from 20°C to 150°C possesses an average value between -0.4%/°C and -0.6%/°C.

**5.** Method for operating a permanent-magnet-excited electric motor having a first active part (8) which is fitted with permanent magnets (11), and a second active part (10) which can be moved relative to the first active part by means of magnetic force of the permanent magnets, by

- moving the first active part (8) relative to the second active part (10), and
- heating at least one of the permanent magnets (11) as a function of a speed of the first active part (8) relative to the second active part (10) such that the magnetic field of the permanent magnet is weakened, wherein
- the heating takes place by means of a separate heating element (12) relative to the second active part (8), and
- the heating element is controlled independently of the
second active part (8),

**characterised in that**
- the heating takes place by means of a heating coil or a heating resistor.

6. Method according to claim 5, wherein the permanent magnet (11) is heated by thermal losses of the second active part (8) and in addition by thermal energy from a heating element (12).


**Revendications**

1. Moteur électrique à excitation par aimants permanents, comprenant

   - une première partie (10) active, qui est occupée par des aimants (11) permanents et
   - une deuxième partie (8) active, qui peut, par la force magnétique des aimants permanents, être déplacée par rapport à la première partie active, ainsi que
   - un dispositif (12) de chauffage, par lequel le champ magnétique d'au moins l'un des aimants (11) permanents peut, par échauffement de l'aimant permanent, être affaibli en fonction d'une vitesse de la première partie active par rapport à la deuxième partie active, dans lequel
   - le dispositif (12) de chauffage a un élément de chauffage distinct par rapport à la deuxième partie (8) active, dans lequel
   - l'élément de chauffage est commandé indépendamment d'une
   commande de la deuxième partie (8) active,
   **caractérisé en ce que**
   - l'élément de chauffage est un filament de chauffage ou une résistance de chauffage.

2. Moteur électrique à excitation par aimants permanents suivant la revendication 1, dans lequel la première partie (10) active est un rotor et la deuxième partie (8) active est un stator, la vitesse étant donnée par le nombre de tours du rotor.

3. Moteur électrique à excitation par aimants permanents suivant la revendication 1 ou 2, dans lequel tous les aimants permanents de la première partie active peuvent être échauffés par le dispositif (12) de chauffage en fonction de la vitesse.

4. Moteur électrique à excitation par aimants permanents suivant l'une des revendications précédentes, dans lequel le coefficient de température de l'induction rémanente des aimants permanents a, dans la plage de températures de 20°C à 150°C, une valeur moyenne comprise entre -0,4%/°C et -0,6%/°C.

5. Procédé pour faire fonctionner un moteur électrique à excitation par aimants permanents, qui a une première partie (8) active, qui est occupée par des aimants (11) permanents, et une deuxième partie (10) active, qui peut, par la force magnétique des aimants permanents, être déplacée par rapport à la première partie active, par

   - déplacement de la première partie (8) active par rapport à la deuxième partie (10) active et
   - échauffement d'au moins l'un des aimants (11) permanents en fonction d'une vitesse de la première partie (8) active par rapport à la deuxième partie (10) active, de manière à affaiblir le champ magnétique des aimants permanents, dans lequel
   - l'échauffement s'effectue par un élément (12) de chauffage distinct par rapport à la deuxième partie (8) active et
   - l'élément de chauffage est commandé indépendamment d'une
   commande de la deuxième partie (8) active,
   **caractérisé en ce que**
   - l'échauffement s'effectue par un filament de chauffage ou par une résistance de chauffage.

6. Procédé suivant la revendication 5, dans lequel on échauffe l'aimant (11) permanent par des pertes de chaleur de la deuxième partie (8) active et, supplémentairement, par de l'énergie calorifique de l'élément (12) de chauffage.

FIG 1

FIG 2

# FIG 3

EP 2 463 992 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009151033 A1